# DEMANDE DE BREVET EUROPEEN

(11) **EP 1 043 474 A1**
(43) Date de publication de la demande: **11.10.2000**
(21) Numéro de dépôt: 99400872.0
(22) Date de dépôt: 09.04.1999
(51) Int. Cl.: E06B 9/68, H02K 11/00, H02K 5/22

(54) **Dispositif d'occultation d'ouvertures, notamment de fenêtres, à moteur électrique et organe de commande pré-câblés en usine**

(71) Demandeur: Franciaflex Industries, 45430 Checy (FR)
(72) Inventeur: Clement, Jean-Paul, 91210 Draveil (FR)
(74) Mandataire: Texier, Christian

(57) **Abrégé**

Le dispositif est destiné à l'occultation d'ouvertures, telles que des fenêtres, et est du type comprenant d'une part un tablier monté mobile entre une position de déploiement et une position d'effacement dans un coffre devant être fixé à la partie supérieure d'une ouverture et d'autre part des moyens d'enroulement et de déroulement du tablier associé à un moteur électrique alimenté à partir d'une source à moyenne tension par des conducteurs et susceptible d'être mis en mouvement dans deux sens opposés au moyen d'un organe de commande manuelle fixé à proximité de l'ouverture.

Il est caractérisé en ce qu'il comprend deux circuits distincts (6-7-8-11-12-13 et 15-16-51-53), l'un étant un circuit électrique dimensionné pour la moyenne tension et dit "d'alimentation" spécifique au fonctionnement du moteur (4), et l'autre étant un circuit dit "de commande" comprenant l'organe de commande manuelle (18) et des conducteurs (15-16, 51-53) reliant ledit organe de commande manuelle (18) à un ensemble de connexion (5) intercalé sur le circuit d'alimentation, entre la source (20) et le moteur (4) et associé au coffre (1), l'un au moins de ces deux circuits étant précâblé en usine audit ensemble de connexion (5)

## Description

Les dispositifs d'occultation d'ouvertures, notamment de fenêtres, sont de différents types selon le but recherché mais ils comportent toujours un tablier mobile entre deux positions extrêmes : pour l'occultation complète de l'ouverture, le tablier est entièrement déployé ; pour un dégagement complet de l'ouverture, le tablier est entièrement effacé, généralement par enroulement sur un tube situé dans un coffre.

Le tablier peut être une simple toile destinée à occulter la lumière du jour, surtout en plein soleil, pour protéger l'intérieur d'un local.

Le tablier peut également être formé d'une série de lames horizontales opaques, afin de masquer, pour les personnes situées à l'extérieur, l'intérieur d'un local éclairé. Un tel dispositif forme également barrage et s'oppose plus ou moins énergiquement aux tentatives de pénétration par effraction.

Les mises en mouvement du tablier, dans un sens comme dans l'autre, sont le plus souvent obtenues au moyen d'un moteur électrique placé à l'intérieur du tube d'enroulement, lui-même situé dans le coffre placé à la partie supérieure de l'ouverture.

Pour que l'usager puisse facilement provoquer la mise en marche et l'arrêt du moteur, un organe de commande doit être placé à un endroit d'accès immédiat, généralement à côté de l'ouverture.

Or, il est évident que cet emplacement est toujours différent d'une ouverture à une autre, en raison de demandes très variables des usagers et selon les dispositions architecturales et décoratives préexistantes.

Cet organe de commande est généralement un contacteur intercalé sur les conducteurs l'alimentation du moteur et son emplacement étant inconnu lors de la fabrication en usine, il doit être raccordé sur place.

Il est donc impossible de précâbler l'organe de commande et le moteur. C'est pourquoi, dans la pratique, l'ensemble mis dans le commerce est en deux parties séparées:
- l'une comprend l'organe de commande seul,
- l'autre comprend le coffre équipé du tube d'enroulement sur lequel se trouve le tablier enroulé, le moteur électrique dans le tube et une amorce de câbles électriques devant être raccordés sur chantier à d'autres câbles de raccordement du moteur au contacteur, ce dernier devant lui aussi être raccordé par des conducteurs coupés à la demande, afin que le moteur puisse être alimenté à partir du secteur, via le contacteur.

Cette structure présente deux inconvénients principaux : en premier lieu, les raccordements de câbles électriques doivent être effectués sur place et pas en usine, et en second lieu, l'emplacement du contacteur sur l'alimentation du moteur a pour conséquence que les raccordements sont compliqués et que les conducteurs doivent être dimensionnés pour la moyenne tension habituelle, à savoir 220-240 Volts.

Ces câbles ont un diamètre important et sont associés à des isolants volumineux, de sorte que leur passage dans des menuiseries, à travers des murs ou le long de cloisons affecte gravement l'esthétique des locaux et provoque tes dégâts très visibles.

En outre, les raccordements électriques sont relativement complexes et, pour éviter les erreurs de branchement, les travaux doivent être confiés à du personnel qualifié.

La présente invention remédie à tous ces inconvénients en permettant de réaliser des dispositifs entièrement câblés en usine et très facile à installer sans dégâts importants.

A cette fin, l'invention a pour objet un dispositif d'occultation d'ouvertures, notamment de fenêtres, du type comprenant d'une part un tablier monté mobile entre une position de déploiement et une position d'effacement dans un coffre devant être situé à la partie supérieure d'une ouverture et d'autre part des moyens d'enroulement et de déroulement du tablier associés à un moteur électrique alimenté à partir d'une source à moyenne tension par des conducteurs et susceptible d'être mis en mouvement dans deux sens opposés au moyen d'un organe de commande manuelle fixé à proximité de l'ouverture, caractérisé en ce qu'il comprend deux circuits distincts, l'un étant un circuit électrique dimensionné pour la moyenne tension et dit "d'alimentation" spécifique au fonctionnement du moteur, et l'autre étant un circuit dit "de commande" comprenant l'organe de commande manuelle et des conducteurs reliant ledit organe de commande manuelle à un ensemble de connexion intercalé sur le circuit d'alimentation, entre la source et le moteur, et associé au coffre, l'un au moins de ces deux circuits étant précâblé en usine audit ensemble de connexion.

Selon d'autres caractéristiques de l'invention :
. le circuit de commande est un circuit électrique associé à une source de courant à très basse tension ;
. la source de courant à très basse tension est le circuit secondaire d'un transformateur dont le circuit primaire est alimenté en courant à moyenne tension ;
. la source de courant à très basse tension est un générateur, tel qu'une pile ou batterie, spécifique au circuit d'alimentation ;
. les conducteurs du circuit de commande sont une ou des fibres optiques associées à une source lumineuse et à un récepteur ;
. l'ensemble de connexion comprend un relais raccordé au circuit de commande et possédant un élément sensible aux informations devant circuler sur les conducteurs dudit circuit de commande en fonction d'actions d'un usager sur l'organe de commande manuelle ;
. l'ensemble de connexion présente au moins un bornier pour le raccordement des conducteurs ;
. avant fixation du dispositif, le coffre contient le moteur électrique connecté aux conducteurs du circuit d'alimentation, l'ensemble de connexion connecté aux conducteurs du circuit de commande et une certaine longueur des conducteurs du circuit d'alimentation et des conducteurs du circuit de commande, seules les extrémités de ces conducteurs dépassant hors du coffre selon une étendue permettant de les extraire selon une longueur supérieure, en fonction des dispositions du lieu où le dispositif doit être mis en place et le moteur connecté à une source de courant en moyenne tension ;
. avant fixation du dispositif, le coffre contient le moteur électrique connecté aux conducteurs du circuit d'alimentation et l'ensemble de connexion, celui-ci possédant deux borniers destinés respectivement aux conducteurs du circuit d'alimentation et aux conducteurs du circuit de commande ;
. après fixation du dispositif, le coffre est situé à la partie supérieure d'une ouverture existante, les conducteurs du circuit de commande traversent un montant du dormant de l'ouverture, de la face arrière de ce montant jusqu'à sa face avant, par un fin passage masqué en façade par l'organe de commande manuelle ;
. après fixation du dispositif, le coffre est situé à la partie supérieure d'une ouverture existante, l'organe de commande manuelle raccordé aux conducteurs du circuit de commande traverse un montant du dormant de l'ouverture, par un fin passage ;
. le dispositif comprend des profilés de guidage des côtés longitudinaux du tablier, dits "coulisses", qui s'étendent latéralement depuis le dessous du coffre jusqu'au voisinage de la partie inférieure de l'ouverture, l'une au moins de ces coulisses présentant au moins un canal longitudinal destiné à recevoir et à maintenir les conducteurs du circuit de commande reliant l'ensemble de connexion et l'organe de commande manuelle.
. le dispositif comprenant des profilés de guidage des côtés longitudinaux du tablier, dits "coulisses" qui s'étendent latéralement depuis le dessous du coffre jusqu'au voisinage de la partie inférieure de l'ouverture, il est caractérisé en ce que l'une de ces coulisses supporte les conducteurs du circuit de commande électrique, dont l'organe de commande manuelle est normalement en position de fermeture du circuit afin de former une boucle, le tablier portant un aimant situé en regard desdits conducteurs ;
. la coulisse présente deux rainures dans la première desquelles les conducteurs du circuit de commande s'étendent depuis l'ensemble de connexion jusqu'au bas de l'ouverture et dans l'autre desquelles ces mêmes conducteurs remontent, après renvoi selon la largeur séparant les deux rainures, jusqu'à la hauteur voulue pour l'organe de commande.

L'invention sera mieux comprise par la description détaillée ci-après faite en référence au dessin annexé. Bien entendu, la description et le dessin ne sont donnés qu'à titre d'exemples indicatifs et non limitatifs.

La figure 1 est une vue schématique montrant dans son ensemble un dispositif conforme à l'invention selon un premier mode de réalisation.

La figure 2 est un schéma électrique correspondant au dispositif de la figure 1.

La figure 3 est une partie du schéma de la figure 2 plus détaillée, montrant en outre un exemple de fixation de l'organe de commande manuelle sur une menuiserie de fenêtre.

Les figures 4 et 5 sont deux schémas correspondant a une variante de réalisation de l'invention selon laquelle le circuit de commande comprend des fibres optiques.

La figure 6 est une vue schématique partielle montrant un dispositif conforme à l'invention selon un mode de réalisation particulier, différent de celui de la figure 1.

La figure 7 est une vue schématique d'ensemble illustrant la mise en place d'un dispositif conforme à l'invention à la partie supérieure extérieure d'une fenêtre préexistante.

La figure 8 est une vue schématique montrant un détail du dispositif de la figure 7.

La figure 9 est une vue schématique partielle en perspective montrant un mode de réalisation particulier de l'invention.

La figure 10 est une vue schématique partielle en coupe selon la ligne X - X de la figure 9.

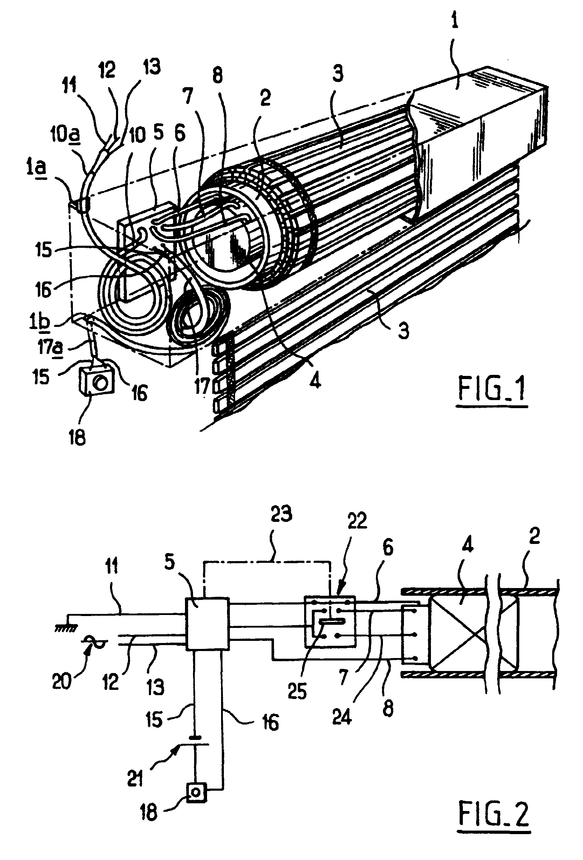

En se reportant à la figure 1, on voit qu'un dispositif conforme à l'invention comprend un coffre 1 dans lequel est monté un tube 2 pour l'enroulement d'un tablier 3 qui, ici, est formé de lames superposées, le tout constituant un "volet roulant".

A l'intérieur du tube 2, est logé un moteur électrique 4 dont le rotor est relié cinématiquement au tube 2, afin de pouvoir entraîner celui-ci en rotation, soit dans un sens, soit dans le sens opposé selon que le tablier 3 doit être abaissé ou levé.

Cet ensemble, connu en soi, est destiné à être placé à l'extérieur d'un bâtiment, à la partie supérieure d'une ouverture, par exemple d'une fenêtre, mais le moteur 4 doit pouvoir être commandé depuis l'intérieur du bâtiment.

Le moteur 4 est associé à un ensemble de connexion 5 auquel aboutissent trois câbles 6, 7 et 8 pour l'alimentation électrique du moteur 4, l'un de ces fils étant un fil de mise à la terre. De l'ensemble de connexion 5, part un câble 10 contenant trois conducteurs 11, 12 et 13 dont l'un est un fil de mise à la terre.

Le câble 10 est lové librement dans le coffre 1 sur une longueur relativement grande et une courte amorce 10a dépasse hors du coffre 1 par une encoche 1a.

A l'ensemble de connexion 5, sont reliés deux conducteurs 15 et 16, placés dans une gaine isolante commune 17 aboutissant à un organe de commande manuelle 18.

La gaine 17 est lovée librement dans le coffre 1 sur une longueur relativement grande et une courte amorce 17a dépasse hors du coffre 1 par une encoche 1b, l'organe de commande manuelle 18 étant connecté aux conducteurs 15 et 16.

L'ensemble qui vient d'être décrit est fabriqué en usine ainsi, c'est-à-dire en particulier avec tous les branchements électriques (dits dans la pratique "câblage") réalisés avant livraison, le tablier 3 étant entièrement enroulé sur le tube 2 pour former un ensemble compact.

Le montage de cet ensemble à la partie supérieure d'une fenêtre est rendu particulièrement facile puisque le seul branchement à réaliser sur site est le raccordement des conducteurs 11, 12 et 13 au secteur, c'est-à-dire à une source de courant.

On observe que le circuit d'alimentation du moteur 4, formé par les conducteurs 6, 7, 8, 11, 12 et 13 est distinct du circuit de commande comprenant les conducteurs 15 et 16 ainsi que l'organe de commande manuelle 18.

Le circuit d'alimentation est relié à une source 20 en moyenne tension qui est, en France, de 220-240 Volts, alors que le circuit de commande est alimenté par un générateur 21 en très basse tension, 6, 12 ou 24 Volts, qui lui est propre: pile jetable ou batterie rechargeable.

Les conducteurs du circuit d'alimentation sont dimensionnés en fonction de la tension moyenne du secteur (plus de 200 Volts) et de la puissance transportée qui correspond à un courant de plusieurs Ampères, nécessaire à un moteur 4 de puissance moyenne.

Le courant du circuit de commande étant en très basse tension, les conducteurs 15 et 16 sont nettement plus fins que ceux du circuit d'alimentation, de sorte qu'ils sont plus souples et plus faciles à mette en place.

En outre, l'usager est mis à l'abri de tout danger électrique du fait qu'en cas de court-circuit son seul contact physique se produisant avec l'organe de commande 18, il ne ressentirait pas la moindre sensation et ne courrait aucun risque.

Lors de la mise en place du dispositif, le monteur dispose le coffre 1 à l'extérieur du bâtiment, à la partie supérieure d'une fenêtre neuve ou préexistante, et extrait du coffre 1, par l'encoche 1a, la longueur de câble 10 qui lui est nécessaire en tirant sur l'amorce 10a.

Si le raccordement au secteur est proche, le monteur tire la longueur de câble 10 juste nécessaire, sans avoir à le couper, et il raccorde les trois conducteurs 11, 12 et 13 au secteur de manière extrêmement simple, aucune erreur n'étant possible, même pour un personnel non qualifié, car l'emplacement de la prise de terre pour le conducteur 11 est très facile à identifier.

Si le secteur est distant, le monteur toit d'abord raccorder un câble plus long, au moyen d'une boîte de dérivation, mais il s'agit encore d'une opération extrêmement simple.

Pour la mise en place du circuit de commande, le monteur extrait du coffre 1, par l'encoche 1b, la longueur de gaine 17 juste nécessaire.

Le coffre 1 étant à l'extérieur du bâtiment et la commande 18 devant être à l'intérieur, il faut ménager un passage qui est ici particulièrement discret compte tenu du très faible diamètre de la gaine 17 et, à fortiori, des deux conducteurs 15 et 16

Le monteur perce un trou de petit diamètre, de l'ordre de quelques millimètres, dans une partie A du dormant de la fenêtre, y introduit de l'intérieur vers l'extérieur du bâtiment les deux conducteurs 15 et 16 puis l'organe de commande manuelle 18 auquel ces conducteurs sont raccordés, et fixe cet organe 18 qui masque le passage, puis reconnecte les conducteurs 15 et 16 à l'ensemble de connexion 5.

Il est facile de remettre dans le coffre 1 la longueur en excédent, de sorte que le monteur peut réaliser un montage parfait, très esthétique, sans avoir provoqué aucun dégât.

On sait qu'au contraire, actuellement, la mise en place de conducteurs pour moyenne tension et courant de plusieurs Ampères jusqu'à un organe de commande nécessite de ménager un passage en traversant le mur, d'où il résulte des débris de maçonnerie, de la poussière de plâtre due aux percements, parfois des taches de plâtre frais de rebouchage, etc.

Lorsque l'usager agit sur l'organe de commande 18, il envoie à l'ensemble de connexion 5 des impulsions électriques qui doivent être interprétées pour agir en conséquence sur l'alimentation du moteur 4.

On peut prévoir dans l'ensemble 5 un contacteur séquentiel qui provoque la mise en marche du moteur 4 dans un sens lors d'une première impulsion électrique, l'arrêt du moteur 4 lors d'une deuxième impulsion, la mis en marche du moteur 4 dans le sens opposé lors d'une troisième impulsion, l'arrêt du moteur 4 lors d'une quatrième impulsion et ainsi de suite, cycliquement. Ici, l'impulsion électrique est, en fait, une simple fermeture du circuit de commande et l'interprétation, le comptage, doit être prévue dans l'ensemble 5 qui peut, par exemple, être une carte électronique assez évoluée.

Cet ensemble 5 agit sur le circuit d'alimentation qui doit être en isolation galvanique parfaite par rapport au circuit de commande, de sorte qu'il faut utiliser des moyens qui garantissent cette isolation électrique.

Sur la figure 2, on a représenté un relais 22 contrôlé par l'ensemble de connexion 5, par exemple par des moyens électroniques symbolisés par un trait mixte 23.

Cette solution, suppose un quatrième conducteur 24 entre le relais 22 et le moteur 4 car, outre le conducteur de mise à la terre 6 et le conducteur constant 8, le moteur doit recevoir deux conducteurs 7 et 24 utilisés sélectivement selon le sens de rotation que l'alimentation électrique doit provoquer.

La position représentée sur la figure 2 correspond à l'arrêt du moteur 4, car la lame conductrice 25 du relais 22 est en position neutre. Selon que cette lame conductrice 25 ferme le circuit d'alimentation par le conducteur 7 (position haute de la lame 25) sur la figure 2, ou par le conducteur 24 (position basse), le moteur 4 est mis en marche dans un sens ou dans l'autre.

Avec la variante qui vient d'être décrite, le circuit de commande comprend une source électrique spécifique 21, sous forme d'un générateur de courant continu à très basse tension.

La présence d'une source spécifique 21 confère une entière autonomie au circuit de commande par rapport au circuit d'alimentation mais cela a pour inconvénient qu'il faut veiller au bon état de la source 21 et, notamment changer la pile lorsqu'il s'agit d'une pile.

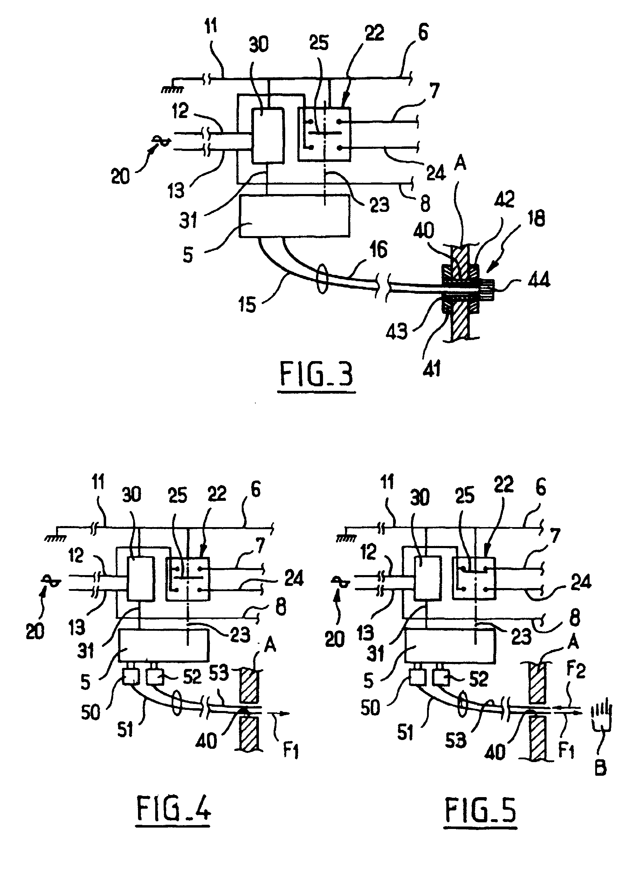

Une autre solution est illustrée par la figure 3 sur laquelle les mêmes éléments portent les mêmes références.

Ici, les deux conducteurs 12 et 13 aboutissent directement respectivement au relais 22 et au moteur 4, tout en ayant une dérivation 12a - 13a qui alimente en permanence le primaire d'un transformateur - redresseur 30, dont le secondaire est relié par une liaison bifilaire 31 à l'ensemble de connexion 5.

Le transformateur - redresseur 30 assure l'isolation galvanique des circuits d'alimentation et de commande, tout en étant alimentés en permanence, sans aucune nécessité de surveillance ou d'entretien, par la même source qu'est le secteur.

Le circuit d'alimentation reçoit la moyenne tension du secteur, 220-240 Volts en courant alternatif, et le transformateur - redresseur débite une très basse tension, 6, 12 ou 24 Volts, dans le circuit de commande, en courant continu.

Les conducteurs 15 et 16 ainsi que l'organe de commande manuelle 18 sont toujours dimensionnés pour cette très basse tension et le très faible courant de commande, et sont donc d'un encombrement minimal

Comme précédemment, l'ensemble de connexion 5 interprète les impulsions issues de l'organe de commande 18 et contrôle la lame conductrice 25 du relais 22.

On a représenté ici une partie de menuiserie A, appartenant au dormant d'une fenêtre et séparant l'extérieur d'un bâtiment où le coffre 1 est placé, de l'intérieur où l'organe de commande manuelle 18 doit être disposé à portée de main d'un usager.

On voit que cette partie A est traversée d'un passage très fin 40, quelques millimètres, pour la fixation de l'organe de commande manuelle 18 qui possède, ici, un corps cylindrique fileté 41 et deux écrous de blocage 42 et 43, ainsi qu'un bouton 44. L'écrou 43 prend appui sur la face de la partie A qui est extérieure au bâtiment, et l'écrou de blocage 42 est engagé et serré à partir de la face de la partie A qui est intérieure au bâtiment.

Les conducteurs 15 et 16 sont connectés d'une part à l'ensemble 5 et d'autre part à l'organe de commande 18, en usine lors de la fabrication.

Après avoir percé le passage 40, on engage l'organe de commande 18 dans le passage 40, de l'extérieur du bâtiment vers l'intérieur, on enfonce le corps cylindrique 41 dans le passage 40, puis on l'immobilise au moyen de l'écrou 42 et l'ensemble est bloqué par serrage de l'écrou 43, ce qui fixe énergiquement l'organe de commande 18 en bonne place, l'écrou 42 masquant parfaitement le passage 40.

Selon un mode de réalisation avantageux de la présente invention, l'organe de commande 18 est formé d'un interrupteur type « crayon », c'est à dire un interrupteur logé dans un corps cylindrique allongé de faible diamètre, typiquement quelques mm, et dont l'élément d'actionnement est accessible à une extrémité dudit corps. Un tel type d'organe de commande 18 peut être fixé, voire même clipsé, par simple engagement, de l'extérieur vers l'intérieur, dans un perçage de petit diamètre ménagé au travers du dormant.

Bien entendu, on peut aussi déconnecter les conducteurs 15 et 16 de l'organe de commande 18, fixer celui-ci puis reconnecter les conducteurs 15 et 16.

L'organe de commande 18 a été décrit ci-dessus comme étant raccordé à deux conducteurs, ce qui est le cas le plus simple mais, selon les circonstances, on peut aussi prévoir plus de deux conducteurs, l'organe de commande étant alors multifonctions.

En se reportant maintenant aux figures 4 et 5, on voit un autre mode de réalisation de l'invention selon lequel on supprime tout passage de courant dans le circuit de commande.

Le circuit d'alimentation reste inchangé et les mêmes éléments portent les mêmes références que sur les figures précédentes.

Ici, l'ensemble de connexion 5, alimenté par le secondaire du transformateur - redresseur 30, comporte d'une part un émetteur de lumière 50 auquel est raccordée une fibre optique 51 et, d'autre part, un récepteur 52 auquel est raccordée une autre fibre optique 53.

Les fibres 51 et 53, placées dans une très fine gaine de protection (non représentée) sont engagées dans le passage 40 où elles sont immobilisées par tout moyen connu, afin que leurs extrémités libres affleurent ou, au moins, soient très proches de la face interne du dormant A.

Etant donné la très grande finesse des fibres optiques, le diamètre total des fibres et de la gaine de protection dans laquelle elles se trouvent est très faible, de sorte que le passage 40 a un diamètre de l'ordre de 2 millimètres, ce qui est insignifiant.

L'usager peut même avoir des difficultés à repérer l'endroit où il doit placer son doigt, de sorte que l'on peut prévoir un petit disque coloré ou luminescent à proximité immédiate, ou un anneau placé autour du passage 40, à l'intérieur du bâtiment.

L'émetteur envoie en permanence un faisceau de lumière qui parcourt la fibre optique 51 et se perd à l'intérieur du bâtiment selon la flèche F1.

Dans ce cas, le relais ne reçoit aucune commande et la lame conductrice 25 reste dans la position qu'elle occupe. Ici, cette lame 25 est en position neutre, ce qui correspond à l'arrêt du moteur 4.

Dés qu'un obstacle est amené à proximité immédiate des extrémités libres des fibres 51 et 53, la lumière sortant de la fibre 51 selon la flèche F1 est réfléchie par cet obstacle, et pénètre dans la fibre 53 selon la flèche F2, qui la conduit au récepteur 52.

Cela constitue une information qui est interprétée par l'ensemble 5, notamment de manière séquentielle comme on l'a expliqué plus haut, de sorte que la lame conductrice 25 du relais 22 change de position.

Ici, la séquence a voulu que l'excitation du récepteur 52 provoque la montée de la lame 25, ce qui ferme le circuit d'alimentation du moteur 4 par le conducteur 7 et provoque la mise en rotation du moteur 4 dans un sens déterminé.

On a représenté en B la main d'un usager qui constitue l'obstacle réfléchissant et l'on comprend que ce simple geste suffit à commander séquentiellement les deux mouvements inverses du moteur et donc la montée ou la descente du tablier 3, ainsi que l'arrêt de celui-ci dans une position quelconque, dès que l'usager place sa main devant les fibres optiques après avoir déclenché un mouvement.

Le cas échéant la lumière émise par l'émetteur 50 peut être codée, par exemple par impulsions binaires. L'électronique d'analyse intégrée à l'ensemble 5 peut ainsi, par détection du code, différencier la lumière codée qui revient par la seconde fibre 53 suite à une réflexion en sortie de la fibre émettrice 51, de la lumière parasite qui pourrait emprunter le même chemin.

Selon une variante de l'invention, une seule fibre optique 51 dont une première extrémité est placée en regard de la source lumineuse 50 mais aussi du récepteur 52, ce qui est possible avec deux composants de faible dimension comparativement à la section de la fibre, transmet un train d'impulsions lumineuses codées depuis la source 50 jusqu'à l'objet réfléchissant, et ce même train d'impulsion après réflexion depuis l'objet jusqu'au récepteur 52. Les différences qui existent entre le train émis et le train réfléchi soit par exemple quant à leur déphasage, ou à leur différence de fréquence résultant de l'effet doppler du au déplacement de l'objet servant de réflecteur, permettent au dispositif électronique d'analyse du signal de constater la présence ou le mouvement d'un objet à proximité immédiate de l'extrémité de la fibre, et de distinguer ce train de lumière de celui qui passe éventuellement naturellement et directement de l'émetteur au récepteur.

Selon encore une autre variante le conduit optique peut comprendre une fibre optique unique 51 sur l'essentiel de sa longueur, à partir de la face interne du bâtiment, ladite fibre optique 51 comportant cependant au niveau de la face externe un coupleur formant dérivation associé à deux tronçons de fibre optique, l'un provenant de l'émetteur 50 et l'autre débouchant en regard du récepteur 52.

Naturellement, le dispositif conforme à l'invention est compatible avec tous les accessoires et compléments voulus, en particulier les fins de course haut et bas.

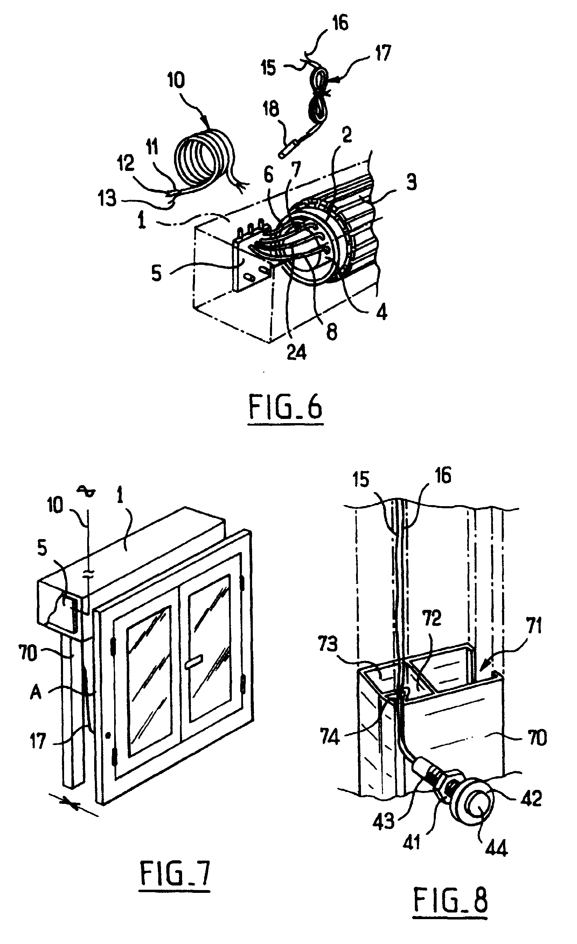

En se reportant maintenant à la figure 6, on voit une variante de réalisation de l'invention selon laquelle le moteur 4 est câblé en usine pour ce qui est de ses liaisons avec l'ensemble de connexion 5.

En revanche, le câble 10 et la gaine 17 sont livrées à part, pliées sur eux-mêmes en pelote, bobine ou fuseau.

L'ensemble de connexion 5 porte deux borniers, l'un à trois bornes 61, 62 et 63 et l'autre à deux bornes moins volumineuses 64 et 65.

Après avoir mis le coffre 1 à sa place, le monteur connecte les trois conducteurs 11, 12 et 13 aux bornes 61, 62 et 63, puis les deux conducteurs 15 et 16 aux petites bornes 64 et 65.

On remarque l'extrême simplicité de ces connexions, qui ne peuvent provoquer aucune confusion de branchement, le câblage plus complexe du moteur 4 et de l'ensemble 5 étant toujours réalise en usine, avant livraison sur le site.

La tablier 3 doit être guidé lors de ses mouvements de montée et de descente, et doit en outre être maintenu dans un plan vertical, lorsqu'il est déployé au moins partiellement.

Pour cela, on utilise des guides latéraux dits "coulisses" qui s'étendent verticalement depuis le voisinage du coffre 1 jusqu'au voisinage du bas de la fenêtre.

Ces coulisses sont fixées au bâtiment et soutiennent le coffre 1 à la partie supérieure de la fenêtre.

Sur les figures 7 et 8, on voit une coulisse 70 constituée par un profilé en alliage léger, généralement en aluminium, dont la section est globalement rectangulaire, avec une petite face ouverte 71 et une cloison transversale de raidissage 72 qui déterminent ensemble une profonde feuillure dans laquelle pénètre l'une des marges latérales du tablier 3. Naturellement, on dispose deux coulisses latérales situées face à face, à l'extérieur du bâtiment, afin de guider les deux marges du tablier 3, ce que l'on a évoqué sur la figure 7.

On peut utiliser l'une de ces coulisses pour y loger les conducteurs (15-16 ou 51-53) du circuit de commande, par exemple dans le canal 73 situé derrière la cloison transversale 72, la sortie de ces conducteurs se faisant soit par l'extrémité inférieure de la coulisse, soit par un trou ménagé à bonne hauteur dans la grande face interne de la coulisse.

Selon une variante avantageuse de l'invention, représentée sur la figure 8, on prévoit une rainure à section sensiblement trapézoïdale 74, débouchant sur la grande face située du côté interne de chaque coulisse, l'ouverture, la largeur et la profondeur de la rainure 74 étant coordonnées au diamètre des conducteurs du circuit de commande, ces conducteurs devant être engagés sous pression modérée dans la rainure 74 et empêchés par elle de ressortir librement, ces conducteurs étant distincts ou tous deux logés dans une gaine.

Ayant déterminé l'emplacement de l'organe de commande manuelle 18, le monteur engage les conducteurs 15 et 16 dans la rainure 74 depuis le voisinage du coffre 1 jusqu'au niveau du passage ménagé dans le dormant A et procède au montage de l'organe 18 comme on l'a expliqué plus haut.

Sur la figure 8, on n'a pas représenté le dormant A afin de ne pas surcharger le dessin mais on comprend que le montage est le même que sur la figure 3.

L'ensemble de connexion peut être placé à l'intérieur du coffre 1, auquel cas celui-ci doit comporter une partie mobile telle qu'un carter ou une trappe, permettant d'accéder à l'ensemble de connexion 5 depuis l'extérieur.

Il peut également être placé à l'extérieur du coffre 1, notamment dans un boîtier (non représenté) auquel on accède sans ouvrir le coffre 1.

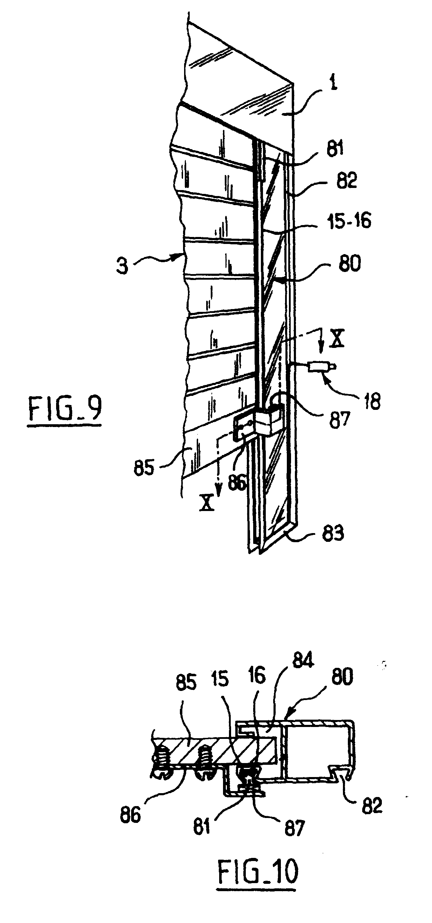

En se reportant maintenant aux figures 9 et 10, on voit un mode de réalisation particulièrement avantageux, selon lequel on utilise le circuit de commande pour obtenir une fonction supplémentaire, à savoir l'arrêt automatique du tablier 3, au cas où un obstacle viendrait accidentellement contrarier son fonctionnement.

Il arrive qu'un objet soit placé sur l'appui de fenêtre, ou à proximité immédiate, de sorte que cet objet empêche la partie la plus basse du tablier d'atteindre la parte inférieure de la fenêtre lorsque l'usage commande la descente du tablier 3.

Cela présente l'inconvénient que la partie basse du tablier est bloquée à l'arrêt alors que le moteur 4 continue de dérouler le tablier 3 du tube 2. Il s'ensuit que le tablier 3 se place tout de travers, ce qui nuit évidemment à l'esthétique, mais ce qui révèle aussi que la fermeture de la fenêtre est imparfaite puisqu'elle laisse subsister un passage.

En outre, cet obstacle peut être la tête ou les mains d'un petit enfant qui peut être blessé et, en tous cas, effrayé.

La présente invention permet de supprimer tous ces inconvénients en utilisant le circuit de commande pour arrêter le moteur quand un obstacle s'oppose aux mouvements normaux du tablier 3.

Une coulisse 80 présente deux rainures à section trapézoïdale 81 et 82 sur sa face située vers l'intérieur du bâtiment.

Les conducteurs 15 et 16 descendent du coffre 1 en étant placés et immobilisés dans la rainure 81, jusqu'à la partie inférieure de la fenêtre, puis sont renvoyés vers la rainure 82, éventuellement par une pièce de guidage 83, et remontent dans la rainure 82 jusqu'à bonne hauteur pour l'organe de commande 18.

Ici aussi, la coulisse 80 a une section globalement rectangulaire, avec une petite face ouverte et une cloison transversale de raidissage qui déterminent ensemble une profonde feuillure 84 dans laquelle pénètre l'une des marges latérales du tablier 3.

La partie la plus basse du tablier 3 est une lame 85 généralement plus épaisse et plus lourde que les autres, et dite "barre de charge" lorsque les lames du volet roulant sont très légères, pour lester le tablier 3 Ici, une patte 86 est fixée à la lame inférieure 85 et porte un aimant permanent 87 situé en regard de la rainure 81 dans laquelle se trouvent les conducteurs 15 et 16.

On comprend que pendant les mouvements du tablier 37 aussi bien vers le haut que vers le bas, l'aimant 87 se déplace devant les conducteurs 15 et 16, à très faible distance de ceux-ci, c'est-à-dire à quelques millimètres.

Lorsque l'organe de commande 18 est en position de fermeture du circuit de commande, les conducteurs 15 et 16 forment une boucle magnétique et l'on utilise cette structure pour détecter l'arrêt inopiné du mouvement du tablier 3 au moyen des effets de l'aimant 87 sur les conducteurs 15 et 16, selon la loi de Lentz.

Selon cette loi, les déplacements de l'aimant 87 à proximité des conducteurs 15 et 16, génèrent dans ceux-ci un courant induit, alors que si l'aimant 87 est à l'arrêt, ce courant induit n'est plus généré.

Ici, on profite de la présence des conducteurs 15 et 16 pour créer une boucle en prévoyant que l'organe de commande 18 est au repos en position de fermeture du circuit de commande, alors qu'il provoque la mise en marche du moteur 4 lorsque ledit circuit est ouvert.

Quand le tablier 3 se déplace librement, un courant est induit dans les conducteurs 15 et 16 à une tension donnée, représentant un état équilibré, d'où un fonctionnement normal du moteur 4.

Quand la lame inférieure 85 est arrêtée par un obstacle, l'aimant est également immobilisé et aucun courant n'est plus induit, ce qui est détecté et utilisé pour stopper immédiatement le moteur 4 qui était en action.

Il suffit a l'usager de retirer l'obstacle et d'agir sur l'organe de commande 18 qui ouvre le circuit de commande, interrompt la boucle dont la résistance devient nulle, ce qui est détecté et utilisé pour remettre le moteur en marche.

Il faut que les conducteurs 15 et 16 s'étendent sur toute la hauteur que doit parcourir la lame inférieure 85, raison pour laquelle ils atteignent en ligne droite le bas de la coulisse 80 et remontent par la rainure 82 jusqu'à la hauteur de l'organe de commande 18.

Selon un mode de réalisation plus simple, on peut disposer les conducteurs 15 et 16 sur la coulisse elle-même, lorsque l'on utilise un profilé standard, sans rainures.

L'invention a été décrite avec l'exemple d'un volet roulant situé à l'extérieur d'un bâtiment mais elle peut également être appliquée à d'autres fermetures ou protections solaires.

## Revendications

1. Dispositif d'occultation d'ouvertures, notamment de fenêtres, du type comprenant d'une part un tablier monté mobile entre une position de déploiement et une position d'effacement dans un coffre devant être situé à la partie supérieure d'une ouverture et d'autre part des moyens d'enroulement et de déroulement du tablier associés à un moteur électrique alimenté à partir d'une source à moyenne tension par des conducteurs et susceptible d'être mis en mouvement dans deux sens opposés au moyen d'un organe de commande manuelle fixé à proximité de l'ouverture, caractérisé en ce qu'il comprend deux circuits distincts (6-7-811-12-13 et 15-16-51-53), l'un étant un circuit électrique dimensionné pour la moyenne tension et dit "d'alimentation" spécifique au fonctionnement du moteur (4), et l'autre étant un circuit dit "de commande" comprenant l'organe de commande manuelle (18) et des conducteurs (15-16, 51-53) reliant ledit organe de commande manuelle (18) à un ensemble de connexion (5) intercalé sur le circuit d'alimentation, entre la source (20) et le moteur (4), et associé au coffre (1), l'un au moins de ces deux circuits étant precâblé en usine audit ensemble de connexion (5).

2. Dispositif selon la revendication 1, caractérisé en ce que le circuit de commande est un circuit électrique associé à une source de courant à très basse tension (21).

3. Dispositif selon la revendication 2, caractérisé en ce que la source de courant à très basse tension est le circuit secondaire d'un transformateur (30) dont le circuit primaire est alimenté en courant à moyenne tension.

4. Dispositif selon la revendication 2, caractérisé en ce que la source de courant à très basse tension (20) est un générateur, tel qu'une pile ou batterie, spécifique au circuit d'alimentation.

5. Dispositif selon la revendication 1, caractérisé en ce que les conducteurs du circuit de commande comprennent au moins une fibre optique (51 et 53) associée à une source lumineuse (50) et à un récepteur (52).

6. Dispositif selon la revendication 5, caractérisé en ce qu'une première fibre optique (51) a une première extrémité placée en regard de la source lumineuse (50) tandis que sa seconde extrémité débouche sur l'intérieur d'un dormant, et la seconde fibre optique (53) a une première extrémité qui débouche également sur l'intérieur du dormant, à proximité de la seconde extrémité de la première fibre optique (51), tandis que sa seconde extrémité est placée en regard du récepteur (52).

7. Dispositif selon la revendication 5, caractérisé en ce qu'une seule fibre optique (51) a une première extrémité placée en regard de la source lumineuse (50) et en regard du récepteur (52),tandis que sa seconde extrémité débouche sur l'intérieur d'un dormant.

8. Dispositif selon la revendication 5, caractérisé par le fait qu'il comprend une fibre optique (51) dont une extrémité est munie d'un coupleur associé à deux tronçons de fibres optiques, l'un provenant de la source lumineuse (50) et l'autre débouchant sur le récepteur (52), la seconde extrémité de la fibre optique (51) débouchant sur l'intérieur d'un dormant.

9. Dispositif selon l'une des revendications 5 à 8, caractérisé en ce que la source lumineuse (50) émet un flux codé, par exemple par impulsions binaires.

10. Dispositif selon l'une des revendications qui précèdent, caractérisé en ce que l'ensemble de connexion (5) comprend un relais (22) raccordé au circuit de commande et possédant un élément sensible aux informations devant circuler sur les conducteurs (15-16, 51-53) dudit circuit de commande en fonction d'actions d'un usager sur l'organe de commande manuelle (18).

11. Dispositif selon l'une des revendications qui précèdent, caractérisé en ce que l'ensemble de connexion présente au moins un bornier pour le raccordement des conducteurs (11, 12 et 13).

12. Dispositif selon l'une des revendications 1 à 11, caractérisé en ce qu'avant fixation du dispositif, le coffre (1) contient le moteur électrique (4) connecté aux conducteurs (6, 7, 8 et 24) du circuit d'alimentation et l'ensemble de connexion (5) connecte aux conducteurs (15 et 16) du circuit de commande et une certaine longueur des conducteurs (11, 12 et 13) du circuit d'alimentation et des conducteurs (15 et 16) du circuit de commande, seules les extrémités de ces conducteurs (11, 12, 13, 15 et 16) dépassant hors du coffre (1) selon une étendue permettant de les extraire selon une longueur supérieure, en fonction des dispositions du lieu où le dispositif doit être mis en place et le moteur (4) connecté à une source de courant (20) en moyenne tension.

13. Dispositif selon l'une des revendications 1 à 12, caractérisé en ce qu'avant fixation du dispositif, le coffre (1) contient le moteur électrique (4) connecté aux conducteurs (6, 7, 8 et 24) du circuit d'alimentation et l'ensemble de connexion (5), celui-ci possédant deux borniers destinés respectivement aux conducteurs (11, 12 et 13) du circuit d'alimentation et aux conducteurs (15 et 16) du circuit de commande.

14. Dispositif selon l'une des revendications 1 à 13, caractérisé en ce qu'après fixation du dispositif, le coffre est situé à la partie supérieure d'une ouverture existante, et les conducteurs (15-16, 51-53) du circuit de commande traversent un montant (A) du dormant de l'ouverture, de la face arrière de ce montant (A) jusqu'à sa face avant, par un fin passage (40) masqué en façade par l'organe de commande manuelle (18).

15. Dispositif selon l'une des revendications 1 à 13, caractérisé en ce qu'après fixation du dispositif, le coffre est situé à la partie supérieure d'une ouverture existante, et l'organe de commande manuelle (18) raccordé aux conducteurs (15-16) du circuit de commande traverse un montant (A) du dormant de l'ouverture, par un fin passage (40).

16. Dispositif selon l'une des revendications 14 ou 15, caractérisé en ce que l'organe de commande (18) est formé d'un interrupteur type « crayon », c'est à dire un interrupteur logé dans un corps cylindrique allongé de faible diamètre, dont l'élément d'actionnement est accessible à une extrémité dudit corps, ledit organe de commande (18) étant fixé, dans un perçage de petit diamètre ménagé au travers du dormant.

17. Dispositif selon l'une des revendications 1 à 16, caractérisé en ce qu'il comprend des profilés de guidage des cotés longitudinaux du tablier, dits "coulisses" (70), qui s'étendent latéralement depuis le dessous du coffre (1) jusqu'au voisinage de la partie inférieure de l'ouverture, l'une au moins de ces coulisses (70) présentant un canal longitudinal (74) destiné à recevoir et à maintenir les conducteurs (15-16, 51-53) du circuit de commande reliant l'ensemble de connexion (5) et l'organe de commande manuelle (18).

18. Dispositif selon l'une des revendications 1 à 17, comprenant des profilés de guidage des côtés longitudinaux du tablier, dits "coulisses" qui s'étendent latéralement depuis le dessous du coffre (1) jusqu'au voisinage de la partie inférieure de l'ouverture, caractérisé en ce que l'une de ces coulisses (80) supporte les conducteurs (15-16) du circuit de commande électrique dont l'organe de commande manuelle (18) est normalement en position de fermeture du circuit afin de former une boucle, le tablier (3) portant un aimant (87) situé en regard desdits conducteurs (15-16).

19. Dispositif selon la revendication 18, caractérisé en ce que la coulisse (80) présente deux rainures (81 et 82) dans la première desquelles les conducteurs (15-16) du circuit de commande s'étendent depuis l'ensemble de connexion (5) jusqu'au bas de l'ouverture et dans l'autre desquelles ces mêmes conducteurs (15-16) remontent, après renvoi selon la largeur séparant les deux rainures (81 et 82), jusqu'à la hauteur voulue pour l'organe de commande (18).
